# FASCICULE DE BREVET EUROPEEN

(11) **EP 1 815 730 B1**
(45) Date de publication et mention de la délivrance du brevet: **10.09.2008**
(21) Numéro de dépôt: 07100473.3
(22) Date de dépôt: 12.01.2007
(51) Int. Cl.: A01C 7/20

(54) **Semoir comportant une série de bras, porteurs de disques semeurs et de rouleaux suiveurs, supportés sous le châssis par l'intermédiaire d'articulations élastiques**
Sämaschine, die eine Reihe von Armen, Halterungen für Säscheiben und Nachläufer umfasst, die auf dem Rahmen mit Hilfe von elastischen Gelenken befestigt sind
Seeder comprising a series of arms, sowing disc and follower holders, supported under the frame by means of elastic articulations

(30) Priorité: 27.01.2006 FR 0600756
(43) Date de publication de la demande: 08.08.2007
(73) Titulaire: Sulky Burel, 35220 Chateaubourg (FR)
(72) Inventeur: Clochard, Daniel SULKY BUREL 35, 35113, Domagne (FR)
(74) Mandataire: Le Faou, Daniel

(56) Documents cités:
- EP-A- 1 391 147
- WO-A-85/05246
- FR-A- 2 855 714

## Description

La présente invention concerne un semoir, et plus particulièrement un semoir dit « de travail du sol simplifié » permettant de semer sans -ou pratiquement sans- travail de labourage préalable du sol.

Des semoirs de ce genre sont décrits par exemple dans les documents GB 1 218 785, GB 2 040 656, FR 2 855 714, EP 0 611 204 et EP 1 212 932.

Le semoir qui fait l'objet de l'invention est du type comprenant un châssis supportant une trémie contenant la semence à distribuer, ce châssis étant pourvu à l'avant d'un timon d'attelage à un tracteur.

Sous le châssis est montée une série de bras similaires, dits bras porteurs, disposés longitudinalement et côte à côte, approximativement horizontalement ; chacun de ces bras est supporté par le châssis, mais possède une certaine liberté de débattement, en direction verticale, par rapport à ce dernier.

Chacun des bras porteurs est équipé d'outils semeurs, consistant par exemple en une paire de disques coupants situés de chaque côté du bras, avec un léger décalage dans la direction longitudinale, chacun de ces disques étant muni d'un coutre relié à la trémie par une tubulure d'alimentation en semence, et adapté pour déposer les graines dans un sillon que le disque trace dans le sol au cours du semis. Il est également équipé d'au moins un rouleau suiveur, et de préférence d'une paire de rouleaux suiveurs, disposés à l'arrière des outils semeurs, et dont la fonction est de compacter le sol sur la semence qui vient d'être déposée afin qu'elle adhère bien au sol et de refermer au moins partiellement les sillons.

Avantageusement il est fait usage de deux rouleaux voisins, disposés « en tandem » avec un montage à double manivelle, tel que décrit dans le document EP 0611 204 précité, auquel on pourra se référer au besoin.

Sur les semoirs connus par les documents de brevet précités, les bras porteurs sont suspendus au châssis par des ressorts de compression hélicoïdaux ou spiraux (à lame), ce qui autorise un débattement important des bras en direction verticale par rapport au châssis.

Un inconvénient rencontré avec ces dispositifs est lié à la distance élevée (dans le sens vertical) entre ces bras et le châssis. Ceci pose des difficultés, notamment pour les semoirs de grande largeur, excédant le gabarit routier, dans lesquels il est nécessaire de relever les rangées latérales des bras en vue du déplacement du semoir sur la route.

Cette distance importante se reporte alors horizontalement sur les côtés du châssis, ce qui oblige à utiliser une trémie étroite, et nuit à la compacité du semoir.

Dans la plupart des dispositifs connus, les systèmes assurant le guidage vertical des bras par rapport au châssis sont relativement complexes, coûteux et exposés à l'usure.

La pression d'application des outils au sol et la profondeur de travail ne sont pas toujours correctement maîtrisées.

Enfin, pour ajuster cette pression, on prévoit généralement de faire basculer le châssis par rapport au sol, par exemple en prévoyant un montage articulé du timon d'attelage sur le châssis, le pivotement relatif de ces deux éléments étant assuré par un vérin hydraulique.

Un tel vérin est représenté par exemple sur la figure 1 du GB 2 222 756 (référence 9) et sur la figure 1 du EP 1 212 932 (référence 100).

Cette solution a pour inconvénient que le châssis n'est pas constamment parallèle au sol; son inclinaison et celle de la trémie, ainsi que des autre équipements qu'il supporte, sont ainsi tributaires des conditions de travail ce qui peut poser des problèmes, notamment de régularité du semis.

L'invention vise à résoudre ces divers problèmes en proposant un semoir du type sus décrit, dans lequel les bras porteurs sont disposés à faible distance sous le châssis porteur, au moyen d'organes de liaison fiables, peu coûteux et résistant à l'usure, avec une possibilité de contrôle précis et facile d'utilisation de la profondeur de travail et de la répartition des efforts au sol, le timon d'attelage et le châssis pouvant avantageusement constituer un ensemble monobloc, dont l'inclinaison n'est pas tributaire de ces efforts.

De plus, ces bras porteurs sont susceptibles d'être relevés afin de réduire encore la distance susmentionnée.

L'invention a donc pour objet un semoir comprenant un châssis qui supporte une trémie destinée à contenir la semence à distribuer, et qui est pourvu à l'avant d'un timon d'attelage à un tracteur, une série de bras similaires indépendants les uns des autres, dits « bras porteurs », étant disposés longitudinalement et côte à côte, approximativement horizontalement, sous ce châssis et étant supportés, avec une certaine liberté de débattement en direction verticale, par celui-ci, dans lequel chaque bras porteur est équipé, d'une part, d'au moins un outil semeur apte à être alimenté en semence à partir de ladite trémie et à déposer les graines au sol et, d'autre part, d'au moins un rouleau suiveur.

Conformément à l'invention, chacun desdits bras est solidaire du châssis par l'intermédiaire d'une paire de systèmes d'articulation élastiques disposés l'un à son extrémité avant et l'autre à son extrémité arrière, chacun d'eux travaillant à la torsion, de manière à développer un couple qui sollicite le bras vers le bas afin d'appliquer fermement l'outil semeur et le rouleau suiveur contre le sol.

Avantageusement, il n'y a pas d'élément de liaison élastique, notamment d'organe de suspension à ressort entre chacun des bras et le châssis, autre que les deux articulations précitées qui travaillent en torsion.

Selon d'autres caractéristiques avantageuses et non limitatives de l'invention :
- le semoir comporte des moyens de réglage du couple de torsion de l'un au moins des systèmes d'articulation ;
- il comporte des moyens permettant de relever simultanément l'ensemble des bras porteurs afin d'écarter du sol les outils semeurs et les rouleaux suiveurs ;
- l'un au moins desdits systèmes d'articulation est composé de deux tubes de section carrée montés coaxialement l'un dans l'autre, avec un décalage angulaire de 45°, le tube intérieur pouvant tourner par rapport au tube extérieur, quatre boudins en matériau souple et élastique, tel que du caoutchouc, disposés à la périphérie du tube intérieur assurant le couple de torsion entre ces deux tubes, dont l'un est solidaire dudit châssis et l'autre est solidaire du bras porteur ;
- les deux systèmes d'articulation sont identiques ;
- c'est avantageusement (mais non obligatoirement) le tube intérieur qui est solidaire du châssis, tandis que le tube extérieur est solidaire du bras porteur ;
- le semoir comporte au moins un vérin porté par le châssis et adapté pour faire pivoter l'un des tubes intérieurs, et de préférence celui du système d'articulation avant, afin de soulever ou d'abaisser les bras porteurs ;
- le semoir comporte des moyens d'ajustage de la pression exercée au sol par l'outil semeur ;
- le système d'articulation avant est relié au bras porteur par l'intermédiaire d'au moins une biellette articulée autour d'un axe transversal monté à l'extrémité avant du bras porteur ;
- le système d'articulation arrière est relié au bras porteur par l'intermédiaire d'une genouillère composé d'un jeu de biellettes, dont l'une est articulée autour d'un axe transversal monté à l'extrémité arrière du bras porteur ;
- le système d'articulation arrière est relié au bras porteur par l'intermédiaire d'une biellette articulée autour d'un axe transversal porté par un excentrique monté rotatif à l'extrémité arrière du bras porteur ;
- chacun des bras porteurs est solidaire d'une roue d'appui au sol positionnée devant ledit système d'articulation avant, et réglable en hauteur par rapport au bras ;
- cette roue est montée, folle en rotation, à l'extrémité d'un levier coudé qui passe au-dessus du système d'articulation avant et qui est articulé à son extrémité arrière autour d'un axe transversal monté à l'avant du bras ;
- c'est le même axe transversal qui assure l'articulation de la biellette et celle du levier à l'extrémité avant du bras porteur ;
- le semoir comporte un dispositif de réglage à cales mobiles permettant de modifier la position angulaire du levier par rapport au bras ;
- le châssis et le timon d'attelage forment un ensemble rigide et indéformable (monobloc).

D'autres caractéristiques et avantages de l'invention apparaîtront à la lecture de la description suivante d'un mode de réalisation préféré de l'invention.

Cette description est faite en référence aux dessins annexés, sur lesquels :
- la figure 1 est une vue de côté schématique d'un premier mode de réalisation d'un semoir conforme à l'invention ;
- la figure 2 est une vue en perspective d'une ligne de semis de ce semoir ;
- la figure 3 est une vue de côté schématique (et plus dépouillée) similaire à la figure 1, d'un second mode de réalisation d'un semoir conforme à l'invention, à roue d'appui avant ;
- la figure 4 est une vue en perspective d'une ligne de semis de ce semoir ;
- la figure 5 est une vue de dessus de la ligne de semis du semoir de la figure 4 ;
- la figure 6 est une vue de détail, avec coupe partielle, du système de réglage en hauteur de la roue d'appui avant :

- la figure 7 est une vue de détail, en perspective, d'un élément intercalaire constitutif de ce système ;
- la figure 8 est une vue de détail d'une variante des moyens de liaison du bras porteur avec le système d'articulation arrière.

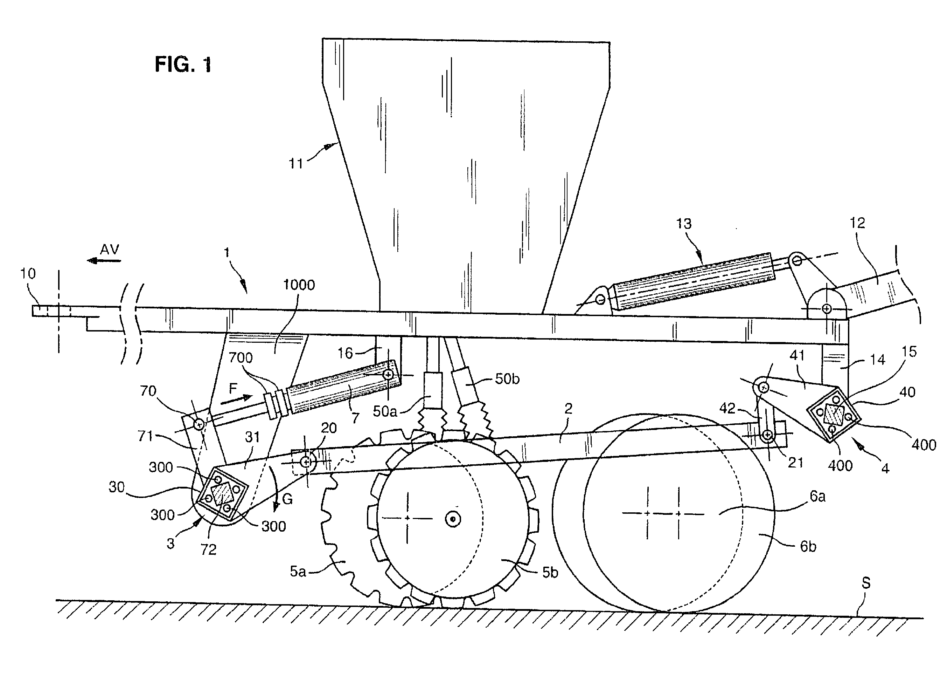

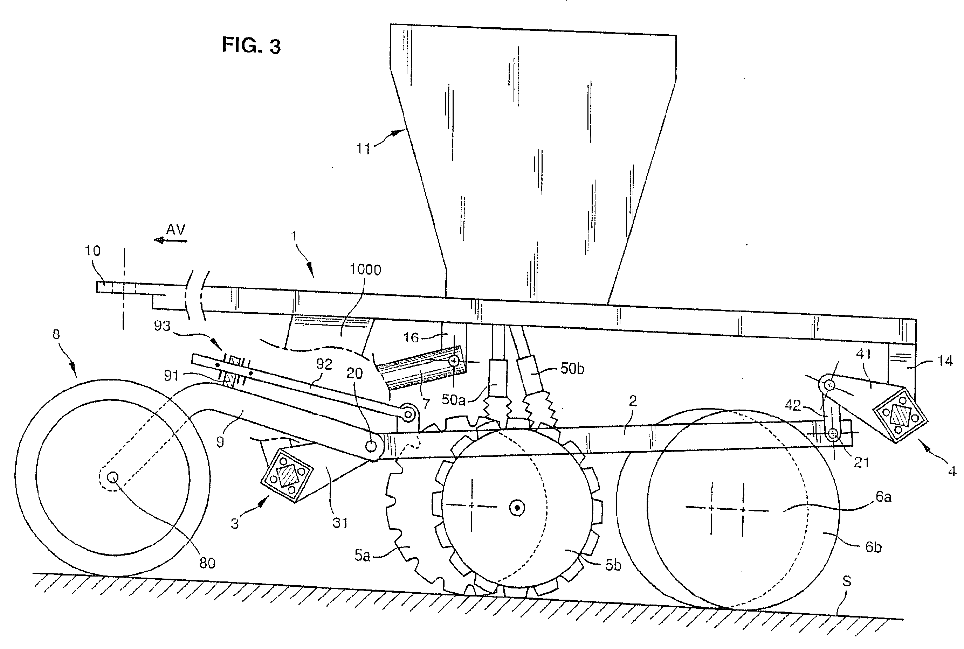

L'avant du semoir, symbolisé par la référence AV sur les figures 1 et 3, est situé sur la gauche des figures 1 à 5.

Le semoir représenté sur la figure 1 comprend un châssis sensiblement horizontal 1 qui supporte une trémie 11 destinée à contenir la semence à distribuer, et qui est pourvu à l'avant d'un timon 10 d'attelage à un tracteur (non représenté).

Le bras de timon s'étend en pratique vers l'avant sur une longueur sensiblement plus grande que celle représentée sur les figures 1 et 3, le bras ayant été interrompu sur ces figures pour ne pas sortir du cadre réservé au dessin.

Le châssis 1 et le timon 10 forment un ensemble rigide et indéformable, par exemple fait de profilés métalliques soudés.

Sous ce châssis sont disposés et suspendus une série de bras porteurs 2 identiques ou analogues, par exemple sous forme de fers plats, indépendants les uns des autres ; ils sont disposés longitudinalement et côte à côte, approximativement horizontalement, sous le châssis 1, et sont supportés, avec une certaine liberté de débattement en direction verticale, par celui-ci.

Chacun des bras 2 est équipé, de façon connue, d'une part, d'une paire de disques semeurs 5a, 5b chacun munis d'un coutre (ou rasette) apte à être alimenté en semence à partir de ladite trémie 11 au moyen d'une tubulure souple appropriée 50a, 50b.

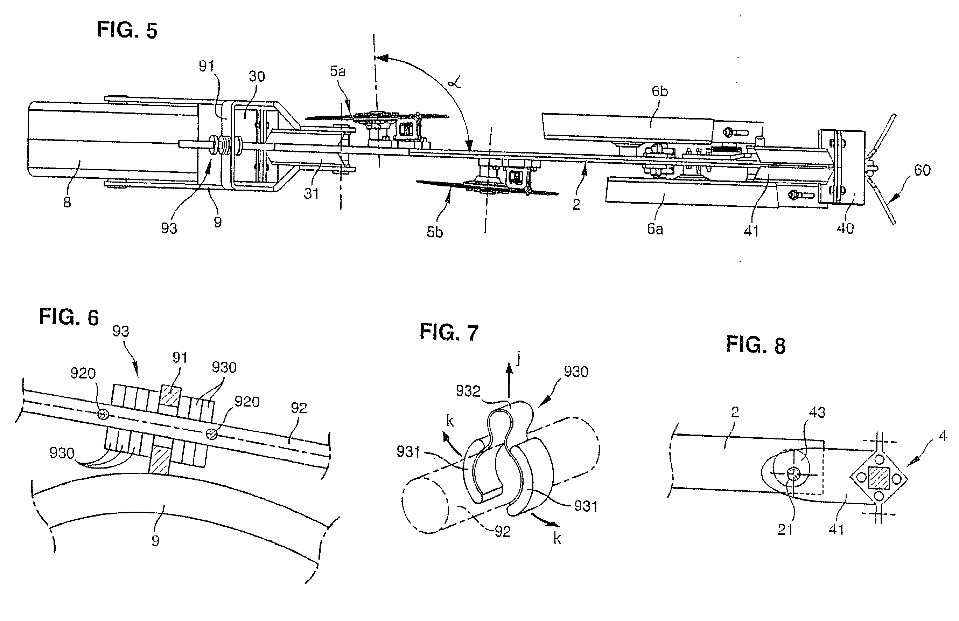

Traditionnellement les disques semeurs sont situés de chaque côté du bras porteur 2, avec un certain décalage longitudinal ; de plus, ils sont légèrement inclinés par rapport à un plan vertical longitudinal, dans le sens d'une convergence vers l'avant ; leur axe de rotation, horizontal, forme un angle α de l'ordre de 93° par rapport un axe transversal (voir figure 5).

Leur fonction est de tracer un sillon au sol et d'y déposer régulièrement les graines provenant des tubulures 50a, 50b.

A l'arrière des disques 5a, 5b, est disposée une paire de rouleaux suiveurs 6a, 6b, également supportés par le bras 2, de chaque côté de celui-ci, et guidés en rotation, adaptés pour rouler sur le sol et le compacter.

Avantageusement le montage de ces disques est conforme aux préconisations du EP 0 611 204, avec un montage « en tandem », à double manivelle ; une telle disposition, toutefois, n'est pas obligée.

Selon une caractéristique de l'invention, chacun des bras 2 est solidaire du châssis 1 par l'intermédiaire d'une paire de systèmes d'articulation élastiques 3 et 4 disposés, respectivement, à ses extrémités avant et arrière, et chacun d'eux travaille à la torsion, de manière à développer un couple qui sollicite le bras 2 vers le bas afin d'appliquer fermement les outils semeurs 5a, 5b et les rouleaux suiveurs 6a. 6b contre le sol S.

A l'arrière du châssis sont montées également, de manière classique, des roues relevables (non représentées) servant au déplacement du semoir sur route ainsi qu'aux demi-tours en bout de champ. Ces roues sont montées aux extrémités de bras pivotants 12 actionnés par un vérin hydraulique 13, de manière à pouvoir être escamotées par relevage en vue du travail de semis, et rabaissées en vue du déplacement sur route.

Dans les modes de réalisation illustrés, les deux systèmes d'articulation travaillant à la torsion sont similaires, comprenant chacun deux tubes de section carrée montés coaxialement l'un dans l'autre, avec un décalage angulaire de 45° et un léger jeu autorisant une rotation du tube intérieur par rapport au tube extérieur, ainsi que quatre boudins 300 précontraints, en matériau souple et élastique, tel que du caoutchouc, par exemple cylindriques, disposés à la périphérie du tube intérieur et assurant le couple de torsion entre ces deux tubes.

Ainsi, l'articulation avant 3 comprend un tube (ou barre) central 72 de section carrée qui s'étend horizontalement, sur toute la largeur du semoir.

Sous le châssis 1, du côté avant de celui-ci, sont montées des plaques de montage verticales et longitudinales 1000, par exemple soudées au châssis. Elles sont par exemple au nombre de quatre, régulièrement espacées et réparties sur la largeur du châssis. Elles sont chacune traversées par une ouverture circulaire, dont le diamètre est légèrement supérieur à la dimension diagonale du tube 72. Ces ouvertures sont disposées coaxialement, selon un axe transversal et horizontal, et sont traversées par le tube 72 dont elles assurent le maintien et le guidage en rotation. Des organes appropriés (goupilles par exemple) en assurent l'immobilisation en translation axiale.

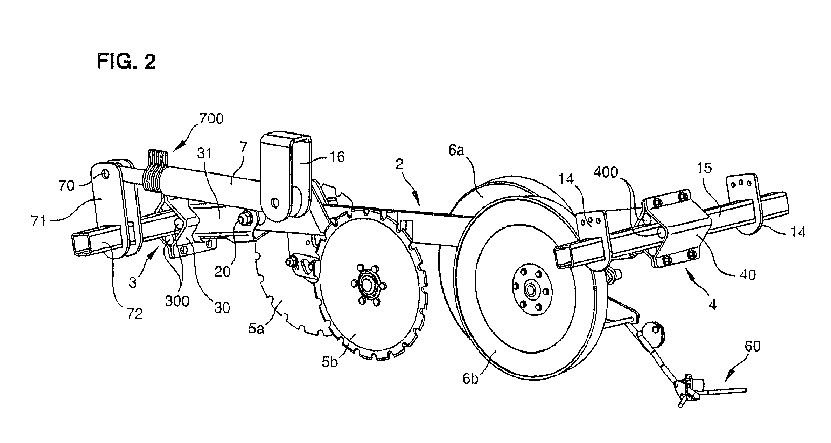

Au niveau de chaque bras, ce tube 72 est entouré coaxialement par un fourreau tubulaire 30, également de section carrée. Comme on le voit sur la figure 2, ce fourreau est en fait constitué de deux demi coquilles en « V » accolées et boulonnées. Sa forme carrée est décalée d'un angle de 45° par rapport à celle du tube intérieur, ménageant de la place pour chaque boudin 300, lequel est monté avec un certain serrage, c'est-à-dire pré comprimé entre les deux tubes.

On comprend que si on sollicite en rotation l'un des deux tubes par rapport à l'autre, autour de leur axe central commun, ces boudins se trouvent comprimés élastiquement, développant ainsi une résistance et un couple de rappel à la torsion. Ce type d'articulation est bien connu en soi (voir par exemple le document FR 2 166 951 (Figure 2).

Il a également été utilisé dans le domaine des semoirs (voir le WO 85/05246), mais avec une application différente, à savoir en actionnant directement un disque semeur et non en agissant sur un bras suspendu au châssis et équipé d'outils semeurs et de rouleaux suiveurs.

Chacun des fourreaux tubulaires 30 est solidaire d'une biellette pivotante 31. Celle-ci prolonge vers l'avant le bras porteur qu'elle équipe, et est articulée sur l'extrémité avant de ce bras par un axe d'articulation transversal et horizontal 20.

Le tube intérieur 72 est solidaire en rotation d'un palonnier 71 constitué d'une paire de flasques parallèles présentant une ouverture carrée traversée par le tube 72 (voir figure 2) ; ce palonnier 71 est articulé par un axe 70 à l'extrémité de la tige d'au moins un vérin hydraulique à double effet 7, dont le corps est lui-même articulé à une pièce 16 en forme de chape, solidaire du châssis 1.

De préférence, il est prévu un vérin de commande unique 7 qui agit au centre du tube 72. Ce vérin possède des cales de butée ajustables 700 aptes à limiter la course de rétraction du vérin.

Le système d'articulation arrière 4 a une configuration proche de celle qui vient d'être décrite. Elle comprend un tube (ou barre) interne 15 de section carrée traversant des fourreaux carrés 40 solidaires de chaque bras, avec interposition de boudins souples et élastiques 400.

Cependant, le tube central 15 est immobilisé en rotation ; il traverse des ouvertures carrées complémentaires ménagées dans des plaques de montage 14 fixées sous le châssis 1, à l'arrière de celui-ci. Le tube extérieur 40 est solidaire d'une biellette 41, articulée à une seconde biellette 42, laquelle est articulée par un axe 21 à l'extrémité arrière du bras 2 correspondant.

A la simple observation de la figure 1, on comprend que lorsque le vérin 7 est sollicité dans le sens de sa rétraction (flèche F), il tend à faire tourner l'articulation 3 de manière à faire descendre le palonnier 31 (flèche G) et le bras 2 de façon à appliquer fermement vers le bas les outils semeurs 5a, 5b ainsi que les rouleaux suiveurs 6a, 6b.

Ainsi, en jouant sur la course de rétraction du vérin, on peut déterminer la profondeur de travail des disques semeurs et la pression d'appui.

Néanmoins, chaque bras possède une certaine liberté de déplacement vertical grâce à la présence des articulations élastiques 3, 4, qui permettent aux outils et aux rouleaux suiveurs de franchir sans dommage les inégalités de terrain et les obstacles, tels que des cailloux.

Le châssis 1 demeure, quant à lui, sensiblement parallèle au sol S.

En jouant sur le nombre de cales 700 présentes on peut ajuster la pression d'appui des disques semeurs 5a, 5b contre le sol S, afin de tenir compte de sa nature, plus ou moins meuble, et ainsi d'optimiser la profondeur de travail, étant observé que vers l'arrière, l'appui au sol est parfaitement défini et contrôlé par les rouleaux 6a, 6b.

En actionnant le (ou les) vérin(s) 7 dans le sens de son (leur) extension, on fait pivoter les palonniers 31 vers le haut et on relève les bras 2, écartant ainsi les outils du sol, ce qui est utile notamment lors des demi-tours en bout de champ, après que les roues arrière escamotables aient été abaissées.

Ce(s) vérin(s) est (sont) bien sûr commandé(s) à distance par l'opérateur, depuis la cabine du tracteur.

On notera représenté sur la figure 2 (mais non sur la figure 1) la présence à l'arrière de la ligne de semis de doigts égalisateurs élastiques 60, de type connu, en forme de « Y ».

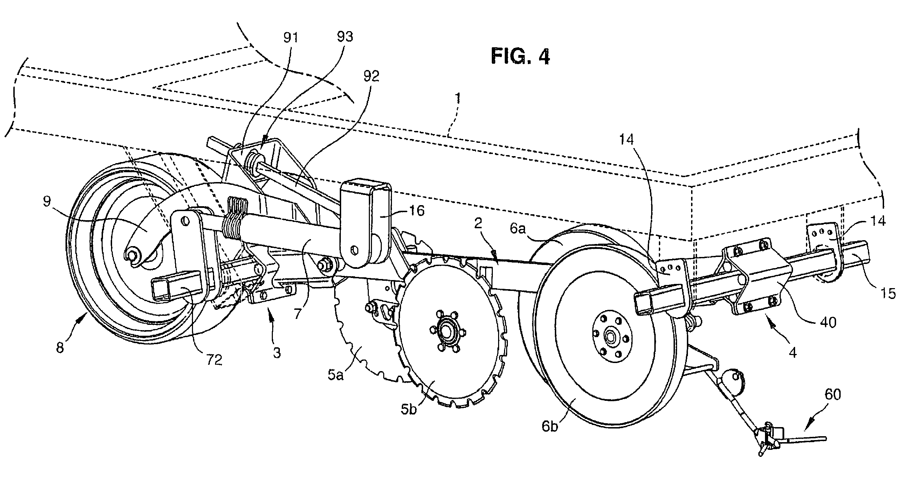

Le second mode de réalisation du semoir illustré sur les figures 3 et 4 est similaire au précédent, excepté qu'il est équipé d'une série de roues d'appui avant 8, montées sur chaque bras porteur 2, selon une disposition analogue à celle qui fait l'objet du document EP 1 212 932, auquel on pourra se reporter au besoin.

La roue 8 est montée et guidée en rotation à l'extrémité d'un levier coudé arqué 9 qui contourne l'articulation élastique 3 par le dessus, et qui est articulé à son extrémité arrière sur l'extrémité avant du bras 2. Dans le mode de réalisation représenté, c'est le même axe 20 que celui par lequel la biellette 31 est articulée sur le bras 2, qui assure aussi cette fonction. Cet agencement préférentiel n'est cependant pas obligatoire, les axes d'articulation pouvant être distincts.

Le levier 9 pourrait tout aussi bien contourner l'articulation 3 par en dessous.

Il est possible d'ajuster la position angulaire du levier 9 par rapport au bras 2 par un dispositif de réglage 93. A cet effet le dessus du levier est muni d'une plaquette 91 présentant une ouverture traversante dans laquelle passe une tige longitudinale 92. Cette dernière est fixée et articulée par son extrémité arrière au bras 2.

Dans sa zone avant, qui traverse la plaquette 91, sont prévues des cales amovibles 93 qui entourent la tige 92, de part et d'autre de la plaquette, et qui sont retenues axialement par des goupilles 920 (voir figure 6).

En jouant sur le nombre de cales présentes devant et derrière la plaquette, on peut régler l'inclinaison du levier 9. Comme le montre la figure 7, les cales 930 peuvent comprendre deux demi coquilles 93 1 reliées par une armature élastiquement déformable 932 qui tend normalement à les rapprocher l'une de l'autre de telle façon qu'elles enserrent la tige 92 à la manière d'une pince. Cependant, en tirant vers le haut sur la cale (flèche **j**) les deux demi coquilles s'écartent l'une de l'autre (flèches **k**), ce qui permet d'enlever la cale ; on peut ensuite la placer par simple encliquetage sur la tige 92, de l'autre côté de la plaquette 91, le nombre total de cales restant le même, quel que soit le réglage.

L'ouverture de la plaquette 91 dans laquelle passe la tige 92 est de préférence oblongue (en forme de lumière verticale) pour permettre un jeu fonctionnel entre la tige et l'ouverture et le passage des cales d'un côté à l'autre.

Ce dispositif de réglage en hauteur de la roue 8 n'est qu'un mode de réalisation possible, parmi d'autres.

Ainsi, par exemple, une autre solution est de boulonner le levier 9 sur le bras 2, juste en avant ou juste en arrière de l'axe 20 (par lequel la biellette 31 est articulée sur le bras 2). Dans ce cas, le levier 9 et le bras 2 forment un ensemble rigide. L'axe 80 de la roue 8 passe dans une lumière verticale (ou approximativement verticale) ménagée à l'extrémité avant du levier 9 et un système de réglage de type connu permet d'en modifier la position en hauteur.

La présence de la roue d'appui avant 8, ajustable en hauteur, améliore la répartition des charges au sol et le contrôle de la profondeur de travail.

Dans ce mode de réalisation, l'ajustage de la pression, au moyen des cales 700 équipant le vérin 7, permet d'ajuster la répartition de la charge entre les zones d'appui arrière (constituées par les rouleaux 6a et 6b), et avant (constituée par la roue 8).

Sur la variante de la figure 8, l'extrémité arrière du bras 2 est relié à l'articulation 4 non pas au moyen d'une genouillère, mais au moyen d'une biellette unique 41, l'articulation 21 étant portée par un excentrique 43 pouvant tourner par rapport au bras porteur.

Dans le cas d'un semoir de grande largeur, les tubes (ou barres) transversaux 72 et 15 constitutifs des articulations élastiques avant et arrière sont tronçonnés en trois parties : une partie centrale fixe et deux parties latérales articulées, susceptibles d'être relevées vers le haut conjointement avec les fourreaux 30, 40 qui les entoure, et les bras 2 avec leur outillage, afin de rentrer dans le gabarit routier, selon un agencement connu en soi. Dans ce cas un vérin de commande 7 est associé bien sûr à chaque tronçon de tube, et les différents vérins peuvent être couplés de manière à agir concomitamment.

## Revendications

1. Semoir comprenant un châssis (1) qui supporte une trémie (11) destinée à convenir la semence à distribuer, et qui est pourvu à l'avant d'un timon (10) d'attelage à un tracteur, une série de bras similaires indépendantes les uns des autres, dits « bras porteurs », étant disposés longitudinalement et côte à côte, approximativement horizontalement, sous ce châssis (1) et étant supportés, avec une certaine liberté de débattement en direction verticale, par celui-ci, dans lequel chaque bras porteur (2) est équipé, d'une part, d'au moins un outil semeur (5a, 5b) apte à être alimenté en semence à partir de ladite trémie (11) et à déposer les graines au sol et, d'autre part, d'au moins un rouleau suiveur (6a, 6b), **caractérisé par le fait que** chacun desdits bras (2) est solidaire dudit châssis (1) par l'intermédiaire d'une paire de systèmes d'articulation élastiques disposés l'un (3) à son extrémité avant et l'autre (4) à son extrémité arrière, chacun d'eux travaillant à la torsion, de manière à développer un couple qui sollicite le bras vers le bas afin d'appliquer fermement l'outil semeur (5a, 5b) et le rouleau suiveur (6a. 6b) contre le sol.

2. Semoir selon la revendication 1, **caractérisé par le fait qu'**il comporte des moyens (7) de réglage du couple de torsion de l'un au moins des systèmes d'articulation (3, 4).

3. Semoir selon la revendication 1 ou 2, **caractérisé par le fait qu'**il comporte des moyens (7,71) permettant de relever simultanément l'ensemble des bras porteurs (2) afin d'écarter du sol les outils semeurs (5a. 5b) et les rouleaux suiveurs (6a, 6b).

4. Semoir selon l'une des revendications précédentes, **caractérisé par le fait que** l'un au moins desdits systèmes d'articulation (3, 4) est composé de deux tubes de section carrée (30, 72 ; 40, 15) montés coaxialement l'un dans l'autre, avec un décalage angulaire de 45° , le tube intérieur (72, 15) pouvant tourner par rapport au tube extérieur (30, 40), quatre boudins (300 ; 400) en matériau souple et élastique, tel que du caoutchouc, disposés à la périphérie du tube intérieur assurant le couple de torsion entre ces deux tubes, dont l'un (72 ; 15) est solidaire dudit châssis (1) et l'autre (30 ; 40) est solidaire du bras porteur (2).

5. Semoir selon la revendication 4, **caractérisé par le fait que** les deux systèmes d'articulation (3, 4) sont identiques.

6. Semoir selon la revendication 4 ou 5, dans lequel l'un au moins desdits tubes inférieurs (72, 15) est solidaire du châssis (1), **caractérisé par le fait qu'**il comporte au moins un vérin (7) porté par ce châssis et adapté pour faire pivoter ce tube intérieur, ce dernier étant de préférence celui (72) du système d'articulation avant (31), afin de soulever ou d'abaisser les bras porteurs (2).

7. Semoir selon l'une au moins des revendications précédentes, **caractérisé par le fait qu'**il comporte des moyens d'ajustage de la pression exercée au sol par l'outil semeur (5a, 5b).

8. Semoir selon l'une au moins des revendications précédentes, **caractérisé par le fait que** ledit système d'articulation avant (3) est relié au bras porteur (2) par l'intermédiaire d'au moins une biellette (31) articulée autour d'un axe transversal (20) monté à l'extrémité avant du bras porteur (2).

9. Semoir selon l'une au moins des revendications précédentes, **caractérisé par le fait que** ledit système d'articulation arrière (4) est relié au bras porteur (2) par l'intermédiaire d'une genouillère composé d'un jeu de biellettes (41-42) dont l'une (42) est articulée autour d'un axe transversal (21) monté à l'extrémité arrière du bras porteur (2).

10. Semoir selon l'une au moins des revendications 1 à 8, **caractérisé par le fait que** ledit système d'articulation arrière (4) est relié au bras porteur (2) par l'intermédiaire d'une biellette (41) articulée autour d'un axe transversal (21) porté par un excentrique (43) monté rotatif à l'extrémité arrière du bras porteur (2).

11. Semoir selon l'une au moins des revendications précédentes, **caractérisé par le fait que** chacun desdits bras porteurs (2) est solidaire d'une roue d'appui au sol (8) positionnée devant ledit système d'articulation avant (3), et réglable en hauteur par rapport au bras (2).

12. Semoir selon la revendication 11, **caractérisé par le fait que** ladite roue (8) est montée à l'extrémité d'un levier coudé (9) qui passe au-dessus du système d'articulation avant (3) et qui est articulé à son extrémité arrière autour d'un axe transversal (20) monté à l'avant du bras (2).

13. Semoir selon les revendications 8 et 12, prises en combinaison, **caractérisé par le fait que** c'est le même axe transversal (20) qui assure l'articulation de la biellette (31) et celle du levier (9) à l'extrémité avant du bras porteur (2).

14. Semoir selon la revendication 12 ou 13, **caractérisé par le fait qu'**il comporte un dispositif de réglage (93) à cales mobiles (930) permettant de modifier la position angulaire du levier (9) par rapport au bras (2).

15. Semoir selon l'une au moins des revendications précédentes, **caractérisé par le fait que** le châssis (1) et le timon (10) d'attelage forment un ensemble rigide et indéformable.

## Claims

1. Seeder comprising a frame (1) supporting a hopper (11) intended to contain seeds to be sown, provided forwardly with a coupling bar (10) to a tractor, a series of similar arms (2) independent of each other called "carrier arms" arranged longitudinally and side by side, approximately horizontally below this frame (1) and being supported by this frame with certain freedom of clearance in vertical direction, in which each carrier arm (2) is equipped firstly with at least one seeding tool (5a, 5b) able to be supplied with seeds from said hopper (11) and to deposit the seeds on the ground, and secondly with at least one follower roll (6a, 6b) **characterized by** the fact that each of said arms (2) is secured to said frame (1) via a pair of elastic articulation systems of which one (3) is arranged at its front end and the other (4) at its rear end, each thereof working under torsional load so as to develop a torque which urges the arm downwardly so as to apply the seeder (5a, 5b) and the follower roll (6a, 6b) firmly against the ground.

2. Seeder according to claim 1, **characterized by** the fact that it comprises means (7) to adjust the torque of at least one of the articulation systems (3, 4) .

3. Seeder according to claim 1 or 2, **characterized by** the fact that it comprises means (7,71) allowing all the carrier arms (2) to be lifted simultaneously so as to draw the seeding tools (5a,5b) and follower rolls (6a,6b) away from the ground.

4. Seeder according to any of the preceding claims, **characterized by** the fact that at least one of said articulation systems (3,4) consists of two tubes of square section (30,72; 40, 15) mounted coaxially one in the other, with an angle shift of 45°, the inner tube (72,15) being able to rotate relative to the outer tube (30,40), four fenders (300;400)in elastic, flexible material such as rubber arranged on the periphery of the inner tube ensuring the torque between these two tubes, of which one (72;15) is secured to said frame (1) and the other (30;40) is secured to the carrier arm (2).

5. Seeder according to claim 4, **characterized by** the fact that both articulation systems (3,4) are identical.

6. Seeder according to claim 4 or 5, in which at least one of said inner tubes (72; 15) is secured to the frame (1), **characterized by** the fact that it comprises at least one jack (7) carried by this frame and adapted to cause this inner tube to pivot, this tube preferably being the tube (72) of the front articulation system (31) so as to raise or lower the carrier arms (2).

7. Seeder according to at least one of the preceding claims, **characterized by** the fact that it comprises adjusting means to adjust the pressure exerted on the ground by the seeder tool (5a, 5b).

8. Seeder according to at least one of the preceding claims, **characterized by** the fact that said front articulation system (3) is linked to the carrier arm (2) via at least one connecting rod (31) hinged about a transverse pin (20) mounted at the front end of the carrier arm (2).

9. Seeder according to at least one of the preceding claims, **characterized by** the fact that said rear articulation system (4) is connected to the carrier arm (2) via a toggle joint consisting of a set of connecting rods (41-42) of which one (42) is hinged about a transverse pin (20) mounted at the rear end of the carrier arm (2).

10. Seeder according to at least one of claims 1 to 8, **characterized by** the fact that said rear articulation system (4) is linked to the carrier arm (2) via a connecting rod (41) hinged about a transverse pin (21) carried by an eccentric (43) rotary mounted at the rear end of the carrier arm (2).

11. Seeder according to at least one of the preceding claims, **characterized by** the fact that each of said carrier arms (2) is secured to a ground-bearing wheel (8) positioned in front of said front articulation system (3) and height-adjustable relative to the arm (2).

12. Seeder according to claim 11, **characterized by** the fact that said wheel (8) is mounted at the end of an angle lever (9) which passes over the front articulation system (3) and which is hinged at its rear end about a transverse pin (20) mounted at the front of the arm (2).

13. Seeder according to claims 8 and 12 taken in combination, **characterized by** the fact that it is the same transverse pin (20) which ensures articulation of the connecting rod (31) and of the lever (9) at the front end of the carrier arm (2).

14. Seeder according to claim 12 or 13, **characterized by** the fact that it comprises an adjustment device (93) with mobile blocks (930) used to modify the angle position of the lever (9) relative to the arm (2).

15. Seeder according to at least one of the preceding claims, **characterized by** the fact that the frame (1) and the coupling bar (10) form a rigid, non-deformable assembly.

## Patentansprüche

1. Sähmaschine, umfassend ein Fahrwerk (1), das einen Trichter (11) trägt, der bestimmt ist, das zu verteilende Saatgut zu enthalten, und der am vorderen Bereich einer Deichsel (10) für einen Traktor vorgesehen ist, eine Reihe von gleichartigen Armen (2), die voneinander unabhängig sind, genannt "Trägerarme", die längs und nebeneinander, ungefähr horizontal, unter dem Fahrwerk (1) angeordnet sind, und die durch dieses getragen werden, mit einer bestimmten Federwegsfreiheit in dazu vertikaler Richtung, wobei jeder Trägerarm (2) einerseits mit mindestens einem Sähwerkzeug (5a, 5b) ausgestattet ist, das geeignet ist, mit Saatgut am Ausgang des Trichters (11) versorgt zu werden und die Körner am Boden abzulegen, und andererseits mit mindestens einer Begleiterwalze (6a, 6b), **dadurch gekennzeichnet, dass** jeder der Arme (2) mit dem Fahrwerk (1) mittels eines elastischen Gelenksystempaars verbunden ist, von denen das eine (3) an seinem vorderen Ende und das andere (4) an seinem hinteren Ende angeordnet ist, von denen beide auf die Torsion wirken, um ein Drehmoment zu entwickeln, das den Arm nach unten belastet, um das Sähwerkzeug (5a, 5b) und die Begleiterwalze (6a, 6b) fest gegen den Boden anzusetzen.

2. Sähmaschine nach Anspruch 1, **dadurch gekennzeichnet, dass** sie Mittel (7) zur Regelung des Torsionsdrehmoments von mindestens einem der Gelenksysteme (3, 4) umfasst.

3. Sähmaschine nach einem der Ansprüche 1 oder 2, **dadurch gekennzeichnet, dass** sie Mittel (7, 71) umfasst, die erlauben, die Gesamtheit der Trägerarme (2) gleichzeitig hochzuheben, um die Sähwerkzeuge (5a, 5b) und die Begleiterwalzen (6a, 6b) vom Boden zu entfernen.

4. Sähmaschine nach einem der vorstehenden Ansprüche, **dadurch gekennzeichnet, dass** das mindestens eine Gelenksystem (3, 4) aus zwei Rohren mit quadratischem Querschnitt (30, 72; 40, 15) zusammengesetzt ist, die zueinander koaxial angebracht sind, mit einer Winkelversetzung von 45°, wobei sich das innere Rohr (72, 15) bezüglich des äußeren Rohrs (30, 40) drehen kann, vier Wülsten (300; 400) aus nachgiebigem und elastischem Material, so wie Kautschuk, die außen an dem inneren Rohr angeordnet sind, die das Torsionsdrehmoment zwischen den zwei Rohren gewährleisten, von denen das eine (72; 15) mit dem Fahrwerk (1) verbunden ist und das andere (30; 40) mit dem Trägerarm (2) verbunden ist.

5. Sähmaschine nach Anspruch 4, **dadurch gekennzeichnet, dass** die zwei Gelenksysteme (3, 4) identisch sind.

6. Sähmaschine nach einem der Ansprüche 4 oder 5, bei welcher mindestens eines der inneren Rohre (72, 15) mit dem Fahrwerk (1) verbunden ist, **dadurch gekennzeichnet, dass** sie mindestens einen Zylinder (7) umfasst, der durch das Fahrwerk getragen wird und ausgestaltet ist, um das innere Rohr zu drehen, wobei dieses letztere vorzugsweise das (72) des vorderen Gelenksystems (31) ist, um die Trägerarme (2) anzuheben oder abzusenken.

7. Sähmaschine nach einem der vorstehenden Ansprüche, **dadurch gekennzeichnet, dass** sie Einstellmittel für den Druck umfasst, der auf den Boden durch das Sähwerkzeug (5a, 5b) ausgeübt wird.

8. Sähmaschine nach einem der vorstehenden Ansprüche, **dadurch gekennzeichnet, dass** das vordere Gelenksystem (3) mit dem Trägerarm (2) mittels mindestens eines Schwingarms (31) verbunden ist, der um eine Querachse (20) gelenkig ist, die am vorderen Ende des Trägerarms (2) angebracht ist.

9. Sähmaschine nach einem der vorstehenden Ansprüche, **dadurch gekennzeichnet, dass** das hintere Gelenksystem (4) mit dem Trägerarm (2) mittels eines Kniehebels verbunden ist, der aus einem Schwingarmsatz (41-42) zusammengesetzt ist, dessen einer (42) um eine Querachse (21) gelenkig ist, die am hinteren Ende des Trägerarms (2) angebracht ist.

10. Sähmaschine nach einem der Ansprüche 1 bis 8, **dadurch gekennzeichnet, dass** das hintere Gelenksystem (4) mit dem Trägerarm (2) mittels eines Schwingarms (41) verbunden ist, der um eine Querachse (21) gelenkig ist, die von einem Exzenter (43) getragen wird, der drehbar am hinteren Ende des Trägerarms (2) angebracht ist.

11. Sähmaschine nach einem der vorstehenden Ansprüche, **dadurch gekennzeichnet, dass** jeder der Trägerarme (2) mit einem Stützrad am Boden (8) verbunden ist, das vor dem vorderen Gelenksystem (3) angeordnet ist und in der Höhe bezüglich des Arms (2) verstellbar ist.

12. Sähmaschine nach Anspruch 11, **dadurch gekennzeichnet, dass** das Rad (8) an dem Ende mit einem abgewinkelten Hebel (9) angebracht ist, der über dem vorderen Gelenksystem (3) verläuft, und der an seinem hinteren Ende um eine Querachse (20) gelenkig ist, die vor dem Arm (2) angebracht ist.

13. Sähmaschine nach einem der Ansprüche 8 und 12, in Kombination verwendet, **dadurch gekennzeichnet, dass** es dieselbe Querachse (20) ist, die die Gelenkigkeit des Schwingarms (31) und die des Hebels (9) am vorderen Ende des Trägerarms (2) gewährleistet.

14. Sähmaschine nach einem der vorstehenden Ansprüche 12 oder 13, **dadurch gekennzeichnet, dass** sie eine Stellvorrichtung (93) mit beweglichen Scheiben (930) umfasst, die erlaubt, die Winkelposition des Hebels (9) bezüglich des Arms (2) zu verändern.

15. Sähmaschine nach einem der vorstehenden Ansprüche, **dadurch gekennzeichnet, dass** das Fahrwerk (1) und die Deichsel (10) eine feste und formbeständige Anordnung bilden.
